(19) Europäisches Patentamt / European Patent Office / Office européen des brevets

(11) **EP 1 903 326 B1**

(12) **EUROPÄISCHE PATENTSCHRIFT**

(45) Veröffentlichungstag und Bekanntmachung des Hinweises auf die Patenterteilung:
**26.01.2011 Patentblatt 2011/04**

(51) Int Cl.:
*G01N 3/22* *(2006.01)*     *G01N 3/32* *(2006.01)*
*G01N 3/04* *(2006.01)*

(21) Anmeldenummer: **07016696.2**

(22) Anmeldetag: **25.08.2007**

(54) **Vorrichtung zur Bestimmung von Torsionsmomenten im Submikronewtonmeterbereich**

Device for determining torsional moments in the submicron Newton metre range

Dispositif destiné à la détermination de moments de torsion inférieurs au micro-Newton-mètre

(84) Benannte Vertragsstaaten:
**AT BE BG CH CY CZ DE DK EE ES FI FR GB GR HU IE IS IT LI LT LU LV MC MT NL PL PT RO SE SI SK TR**

(30) Priorität: **23.09.2006 DE 102006044522**

(43) Veröffentlichungstag der Anmeldung:
**26.03.2008 Patentblatt 2008/13**

(73) Patentinhaber: **Karlsruher Institut für Technologie 76131 Karlsruhe (DE)**

(72) Erfinder:
• **Walter, Mario, Dr.**
  **74864 Fahrenbach (DE)**
• **Kraft, Oliver, Prof. Dr.**
  **76706 Dettenheim (DE)**
• **Klotz, Marco**
  **76646 Bruchsal (DE)**

(56) Entgegenhaltungen:
**DE-A1- 10 020 950     DE-A1- 10 058 498
US-A- 3 661 012     US-A- 4 875 375**

**Beschreibung**

Die Erfindung betrifft eine Vorrichtung zur Bestimmung von Torsionsmomenten im Submikronewtonmeterbereich in kleinen Komponenten, weiter bevorzugt an Einzelfasern gemäß des ersten Patentanspruchs.

Torsionsversuche dienen zur Bestimmung von Torsionsverfestigungskurven, aus denen sich Schubmodul, Torsionsstreckgrenze, Torsionsdehngrenzen und Torsionsfestigkeit eines Werkstoffes, einer Komponente oder eines Bauteils bestimmen lassen. Bei spröden Werkstoffen, worunter auch dünne Kohlenstoff- oder Glasfasern zählen, reduzieren sich die zu ermittelnden Kenngrößen auf die Torsionsfestigkeit und den Schubmodul. Torsionsversuche dienen somit der Einstellung eines reproduzierbar definierten Belastungszustands in einer zu prüfenden Probe, der sich nicht nur auf Untersuchungen zum elasto-plastischen Materialverhalten beschränkt.

Mit einer zunehmenden Miniaturisierung der Proben besteht die grundlegende Problematik darin, eine geeignete Versuchstechnik bereitzustellen, die belastbare quantitative Aussagen über den Belastungszustand ermöglicht. Bei immer geringer werdenden Abmessungen von Komponenten und Bauteilen werden deren mechanische Verhalten bei Deformation bis hin zum Versagen zunehmend auch von morphologischen Abmessungen im Gefüge wie z.B. der Korngröße oder der Versetzungsstrukturen der verwendeten Werkstoffe beeinflusst. Vor allem bei mechanischer Verformung von duktilen Werkstoffen wie Metalle erfolgt eine Verfestigung, die maßgeblich von Dehnungsgradienten augrund einachsiger oder mehrachsigen Belastungen beeinflusst werden. Diese Dehnungsgradienten führen insbesondere mit abnehmenden Komponentenabmessungen folglich zu einem im Vergleich zu makroskopischen Bauteilen veränderten Fließverhalten, weshalb sie bei einer mathematischen Beschreibung des Materialverhaltnes nicht mehr vernachlässigt werden können.

Bei Torsionsversuchen werden meist das Torsionsmoment sowie die durch das Torsionsmoment verursachte Drehwinkeländerung in der Probe gemessen. Proben wie beispielsweise Gummi- oder Langfaserproben, welche während des Torsionsversuches große Drehwinkeländerungen, d.h. ein nachgiebiges Verhalten zeigen, neigen zudem zu einem Aufzwirbeln und damit zu größeren Längenänderungen der Probe während des Torsionsversuches. Deswegen werden bei derartigen Proben zusätzlich die Längenänderung und / oder die Axialkraft der Probe gemessen.

Torsionsprüfvorrichtungen dienen zur Durchführung von Torsionsversuchen. In einer einfachen Ausführung wird eine Probe, vorzugsweise eine unverjüngte Rundprobe, auf der einen Seite über einen Getriebemotor oder einen angesetzten Hebelmechanismus tordiert, während auf der anderen Seite der Probe das anliegende Drehmoment gemessen wird. Bei der Torsionsprüfung an Fasern werden jedoch nur geringe Drehmomente erwartet. Meist werden für die Messung spezielle Aufnehmer verwendet, bei dem ein aufgebrachtes Torsionsmoment gegen ein oder mehrere Federbleche mit linearer Federkennlinie wirkt, und die Nachgiebigkeit optisch über Ablenkung eines Lichtstrahles durch einen mitdrehenden Spiegel gemessen wird. Die Axialkraft ist durch einen derartigen Aufnehmer nicht messbar.

In der JP 07333126 A wird eine Vorrichtung für optische Fasern offenbart, bei der eine Einzelfaser in zwei Spannvorrichtungen eingespannt und auf Zug belastet wird und dabei durch einen Steppermotor zusätzlich tordiert wird.

Die DE 1 828 549 U offenbart dagegen eine Vorrichtung zur quantitativen Bestimmung eines Torsionsmoments in länglichen Proben. Die Vorrichtung umfasst zwei Einspannungen für die Probe, wobei eine Einspannung zum Aufbringen eines Drehmoments axial motorisch angetrieben und die andere Einspannung mit einem Sensor ausgestattet ist. Dieser Sensor umfasst einen auf Biegung beanspruchten Stab als Drehmomentstütze, wobei die Biegung des Stabs ein Maß für das Drehmoment darstellt. Die Biegung ist quantitativ über applizierte Dehnungsmessstreifen, alternativ über kapazitiv oder induktiv wirkende Messorgane erfassbar.

Auch in der DE 100 58 498 C2 wird eine Vorrichtung zur Bestimmung eines Torsionsmoments in Fasern beschrieben, wobei das Torsionsmoment ebenfalls über eine mit Dehnungsmessstreifen applizierte elastische Messfeder als Drehmomentstütze erfasst wird. Zur Erfassung auch kleiner Torsionsmomente wird diese jedoch von der Einspannung entkoppelt direkt auf der Faser appliziert, wobei sie sich beidseitig von der Faser axial abstehend gegen je ein Festlager abstützt.

Messaufnehmer, die die Messgröße über eine elastische Nachgiebigkeit erfassen, neigen grundsätzlich zu mechanischen Hystereseeffekten. Die Wirkung dieser Effekte wird systembedingt mit einem Einsatz von aufgeklebten Dehnungsmessstreifen erheblich verstärkt. Müssen zudem sehr kleine Torsionsmomente, wie z.B. an dünnen Fasern mit Querschnitten unter 100 $\mu$m gemessen werden, ist alternativ zum Einsatz von entsprechend sehr nachgiebigen Federelementen mit der vorgenannten Hysterespoblem eine Miniaturisierung der Messaufnehmer möglich. Damit reduziert sich zwar in vorteilhafter Weise auch das Eigengewicht des Messaufnehmers und damit eine Störgröße der Messung, dafür treten aber zunehmend auch die vorgenannte Hysterese beeinflussende Gefügeeffekte in den Biegeelementen in den Vordergrund. Außerdem sind einer Miniaturisierung durch Dehnungsmessstreifen nach unten hin Grenzen gesetzt.

**Aufgabe der Erfindung** ist es daher, eine Vorrichtung zur experimentellen Bestimmung des Torsionsmoments in Torsionsversuchen in kleinen Komponenten insbesondere an dünnen Fasern zu schaffen, die eine Messung von sehr kleinen Drehmomenten möglichst ohne die vorgenannten Einschränkungen durch systembedingten Hystereseeffekten ermöglicht.

Die Aufgabe wird mit einer Vorrichtung mit den Merkmalen des ersten Patentanspruchs gelöst. Unteransprüche geben vorteilhafte Ausführungsformen dieser Vorrichtung wieder.

Die Aufgabe wird durch eine Vorrichtung zur Bestimmung von Torsionsmomenten im Submikronewtonmeterbereich in Komponenten gelöst. Sie umfasst eine obere und eine untere Einspannung für die Komponente, vorzugsweise eine Einzelfaser (z.B. Golddrähte mit einem Durchmesser von 10 bis 100 $\mu$m), wobei eine der Einspannung drehbar gelagert und zum Aufbringen eines Drehmomentes auf die Komponente vorzugsweise motorisch angetrieben ist. Vorzugsweise ist die Drehachse der einen Einspannung in Richtung der anderen Einspannung orientiert und / oder gibt vorzugsweise die Ausrichtung der Einspannungen an. Die eigentliche Torsionsmessung erfolgt mittels eines Messteils, welches auf die Komponente zwischen den beiden Einspannungen fest aufgesetzt ist. Sie ist so von den beiden Einspannungen entkoppelt und ermöglicht so in vorteilhafter Weise mechanisch getrennt eine Erfassung einer optionalen zusätzlichen Zug- oder Druckbelastung zwischen den beiden Einspannungen und eine Drehbelastung zwischen einer Einspannung und des auf der Komponente fest aufgesetzten Teils des Messteils. Das Messteil umfasst eine auf eine Tastnadel eines Kraftsensors wirkende Drehmomentstütze als auf der Komponente fest aufgesetzten Teil. Vorzugsweise kommen hierbei piezoelektrische Kraftsensoren zum Einsatz, alternativ auch andere Sensoren wie z.B. kapazitive, ohmsche oder induktive Systeme. Zur Vermeidung von radialen Querkräften auf die Komponenten ist die Drehmomentstütze vorzugsweise mit mindestens zwei im gleichen Winkel um die Drehachse zueinander abstehenden Ausleger ausgestaltet, die jeweils auf ein eigenes Messteil, d.h. eine eigene Tastnadel wirken. Dadurch gleichen sich die Kräfte der Drehmomentstütze auf die Tastnadeln gegenseitig auf. Eine dieser Kräfte muss in vorteilhafter Weise nicht von der Komponente in Form einer Gegenkraft oder -bewegung mit aufgenommen werden. Jedes Messteil erfasst dabei eine Kraft grundsätzlich unabhängig von anderen Messteilen. Mehrere Messteile können jedoch für eine Momentenbestimmung (z.B. durch Mittelwertbildung) miteinander verschalten werden.

Es liegt im Rahmen der Erfindung, eine Vorrichtung mit mehreren Messteilen auszustatten, die sich zugunsten eines erweiterten Messbereichs und/oder einer erhöhten Messgenauigkeit in bestimmten Drehmomentfenstern in ihren Messbereichen und/oder Messgenauigkeiten voneinander unterscheiden.

Die Einspannungen werden in einer bevorzugten Ausführungsform in die Auflager einer Werkstoffprüfmaschine, vorzugsweise eine mechanische Universalprüfmaschine integriert. Dabei ist es für die Eliminierung von zusätzlichen durch die Gewichtskraft insbesondere auf das Messteil einwirkenden Biegemomenten vorteilhaft, wenn einerseits der Schwerpunkt der auf der zu prüfenden Komponente befestigte Teil des Messteils auf der Drehachse liegt und andererseits die Auflager vertikal übereinander angeordnet sowie die Verfahrrichtung der Prüfmaschine ebenso vertikal ausgerichtet ist.

Wesentlich ist der Einsatz eines piezoelektrischen Kraftsensors mit Tastnadel, wie sie z.B. bei Rasterkraftmikroskopen, aber auch bei Plattenspielern zum Einsatz kommen. Ein derartiges Messmittel eignet sich zur quantitativen Erfassung selbst kleinster Kräfte, wobei eine Biegung der Drehmomentstütze prinzipbedingt nicht mehr zur Erfassung des Drehmoments erforderlich ist.

Die Erfindung wird im Folgenden anhand von Ausführungsbeispielen mit Figuren näher erläutert. Es zeigen

Fig. 1 den schematischen Aufbau der Vorrichtung zu Messung des Torsionsverfaltens einer Einzelfaser,

Fig.2 eine alternative Gestaltung einer Vorrichtung zu Messung des Torsionsverfaltens einer Einzelfaser,

Fig.3 eine schematische Darstellung der für einen Versuch präparierten Faser,

Fig.4 eine Kalibrierungsmesskurve für einen Kraftsensor, ermittelt an einem Wolframdraht in einem Diagramm sowie,

Fig.5a und b Ergebnisse von Torsionsversuchen an Golddrähte in einem Torsionsmoment-Schubdehnungs-Diagramm.

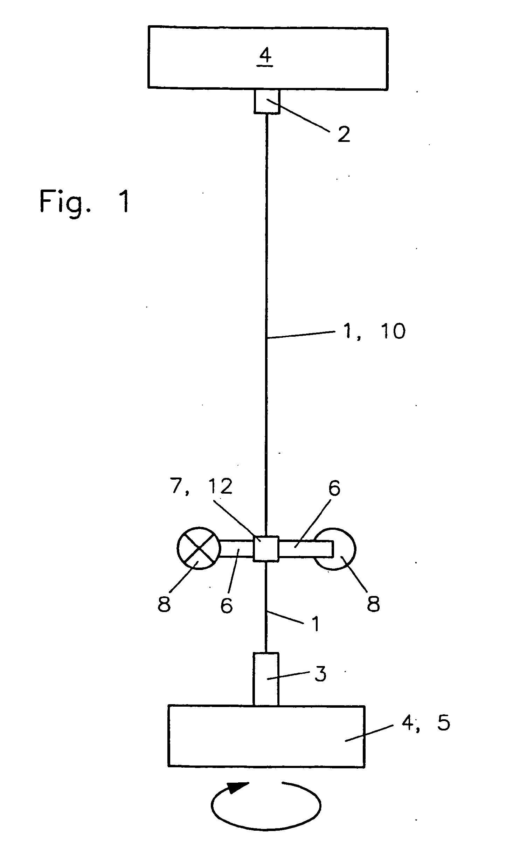

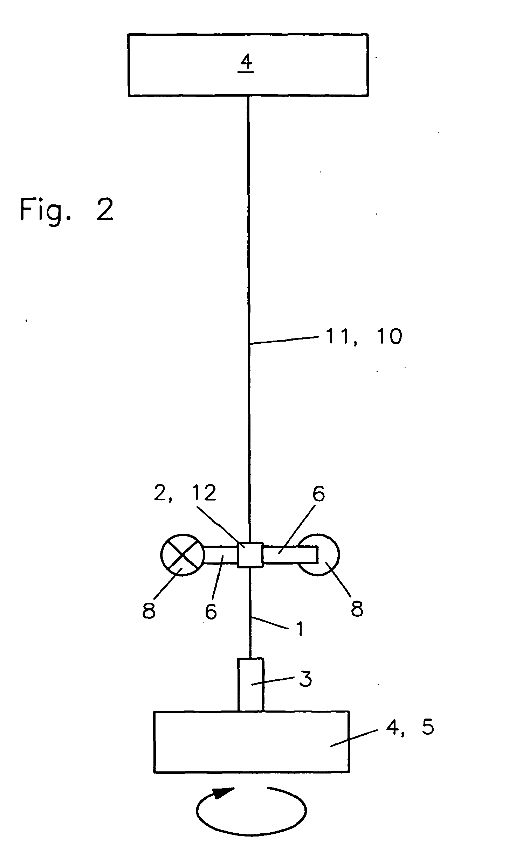

Das Grundprinzip der Vorrichtung zeigen Fig.1 wie auch Fig.2 schematisch. Die Komponente ist in beiden Fällen eine Einzelfaser 1, die in eine obere und eine untere Einspannung 2 bzw. 3 fest eingespannt ist und über prüfmaschinenseitige Auflager 4 von einer nicht dargestellten Universalprüfmaschine auf Zug belastbar ist. Das untere Auflager ist dabei als Drehtisch 5 gestaltet, wobei die Ausrichtung der Drehachse der der eingespannten Einzelfaser 1 entspricht. An der Einzelfaser (Fig.1) oder der oberen Einspannung 2 (Fig.2) ist zudem jeweils ein steifer Querbalken 6 als die vorgenannte Drehmomentstütze mit zwei zur Einzelfaser symmetrischen Auslegern durch vorzugsweise (Fig. 1) durch Klebung 7 fixiert, die beidseitig und symmetrisch zur Einzelfaser auf je eine bevorzugt piezoelektrische Kraftmessvorrichtung 8, vorzugsweise der vorgenannten Art einen Kraftsensor mit Tastnadel umfassend, wirkt. Dabei werden Kraftsensoren z.B. über feinst justierbare Mikromanipulatoren (Wegauflösung bis 0,5 nm) an den Querbalken, vorzugsweise an konvex gewölbte oder als Führung für Tastnadeln gestaltete Krafteinleitungsflächen, herangeführt.

Bei der in Fig.1 dargestellten Ausführungsform eignet sich anstelle der Verklebung auch ein Bondingverfahren wie z.B. Thermokompressionsverfahren (z.B. Ballheadbonding) oder Ultraschall gestützte Verfahren (z.B. Wedgebonding), wobei die Verbindung nicht zu einem vorzeitigen Bruch der Faser führen sollte. Die Einzelfaser wird durch den Querbalken in zwei Teilbereiche aufgeteilt, wobei nur der untere Teilbereich zwischen der Klebung **7** und der unteren drehtischseitigen Einspannung **3** durch den Drehtisch **5** tordiert wird und die Messstrecke **9** bildet. Der in der Ausführungsform oben angeordnete Teilbereich **10** wird aufgrund der nahezu fehlenden Drehverschiebung zwischen Verklebung **7** und oberer Einspannung **2** nicht tordiert und dient der Übertragung von Zugkräften zwischen den Auflagern **4.**

In der Ausführungsform gemäß **Fig.2** sind die Ausleger (Querbalken) fest mit der Einspannung verbunden, vorzugsweise mit einer Löt- oder Schweißverbindung. Bei dieser Ausführungsform greifen die Ausleger nicht direkt an der Einzelfaser an, sondern vorzugsweise an der Einspannung oder anderen Teilen der Vorrichtung. Auf diese Weise lassen sich mögliche Fehlbelastungen von der Einzelfaser besser kontrollieren und bei Bedarf durch z.B. eine Führung (z.B. Zugelement) eliminieren.

Generell kann der obere Teilbereich auch zur Vermeidung eines vorzeitigen Bruchs in diesem Bereich durch ein torsionselastisch nachgiebiges separates Zugelement **11** (vgl. **Fig.2**) wie z.B. eine Faser z.B. mit einer erhöhten Festigkeit gebildet sein, wobei dann die zu testende Einzelfaser sich lediglich über die unteren Messstrecke **9** erstreckt und die Verklebung **7** als Kupplungsstück **12** dient. In der Vorrichtung werden die in der Messstrecke **9** eingesetzten zu untersuchenden Komponenten, wie z.B. metallische Drähte oder Einzelfasern, über ein Kupplungsstück mit der Komponente verbunden (vorzugsweise gebonded oder verklebt) und in einer Universalprüfmaschine unter einer geringen Vorlast eingespannt.

Werden die Proben im Rahmen eines Torsionsversuchs mit Hilfe des in die Prüfmaschine eingebauten Drehtisches tordiert, überträgt der Balken das durch die Verdrillung der Komponente wie z.B. der vorgenannte Faser ein der Messstrecke hervorgerufene Torsionsmoment auf die Kraftsensoren (Torsionsmoment M = Summe der Kräfte auf je ein Kraftsensor F x Hebelarm je Messteil a). Deren Signale werden verstärkt an einen PC mit integrierter Messwerterfassung weitergegeben dort mit den zugehörigen Daten (aktueller Verdrehwinkel) des Drehtisches verknüpft, so dass die jeweiligen Torsionsmomente in Abhängigkeit der aktuellen Schubdehnungen bestimmt werden können.

Grundsätzlich ist ein Kraftsensor zur Momentbestimmung ausreichend. Mit zwei, wie in **Fig.1 und 2** zu sehen, diagonal gegenüberliegend in gleichem Abstand angebrachte Sensoren wird aber eine zur Faser hin vorteilhafte symmetrische Anordnung der Vorrichtung erzielt. Diese bewirken eine aufgrund einer nicht zur Rotationsachse symmetrischen Kraftübertragung auf nur einen Kraftsensor, damit eine seitliche Auslenkungsneigung der Komponente von der Rotationsachse und damit die Erfordernis einer Verschiebemöglichkeit des Drehtisches (und der Rotationsachse) in x-y-Richtung. Grundsätzlich können diese Auswirkungen bei dieser Anordnung auch rechnerisch ermittelt werden, bzw. durch Mittelung mehrerer Messkurven eliminiert werden.

Um Materialverhalten im Rahmen dynamischer oder zyklischer Torsionsversuchen, d.h. bei gegenläufiger Belastung (Umkehr der Drehrichtung in den negativen Momentbereich nach Entlastung) oder zyklischer Belastung (z.B. Verhältnis von Maximalmoment zu Minimalmoment R = -1) zu untersuchen, kann für die Erfassung der Torsionsmomente durch einen, den gesamten Momentenbereich inkl. Dem Nulldurchgang erfassenden Kraftsensortyp oder durch jeweils für den positiven und den negativen Momentenbereich separaten Kraftsensoren herangezogen werden. Alternativ lassen sich auf die Querbalken auch eine elastische Vorspannung bekannter Größe z.B. über zusätzlich auf die Querbalken und über diese auf die Kraftmessvorrichtungen wirkende Federn hierfür verwenden, wobei die Vorspannung bei der anschließenden Ermittlung des Torsionsmoments rechnerisch zu eliminieren ist.

Als Kraftsensoren werden vorzugsweise sog. AFM (Atomic Force Microscope) -tips oder -cantilever eingesetzt. Durch die stetige Entwicklung innerhalb der letzten Jahre im Bereich der Rasterkraftmikroskopie sind heute Messspitzen kommerziell erwerbbar, die problemlos Messungen mit Auflösungen im nN-Bereich zulassen. So können beispielsweise auch duktile metallische Drähte aus Kupfer, Gold etc. mit einem Durchmesser von 10 $\mu$m und kleiner in der Vorrichtung getestet werden. Die Durchführbarkeit von Experimenten wird hier grundsätzlich weniger durch die Sensitivität der Messapparatur beschränkt, sondern eher durch Grenzen der Präparationsfähigkeit/Handhabbarkeit immer dünner werdender Proben.

Da bei Torsionsversuchen aufgrund des polaren Flächenträgheitsmoments die maximal auftretenden Kräfte als Funktion des Querschnitts in höheren Potenzen eingehen, führt eine stetig kleiner werdende Querschnittsfläche zwangsläufig zu sehr stark abfallenden Torsionsmomenten. Um eine möglichst hohe Messgenauigkeit zu erreichen ist es dementsprechend sinnvoll, für unterschiedliche Messbereiche unterschiedlich sensitive Tastnadeln einzusetzen. Hierbei können jedoch mit einer Tastnadel größere Intervallbereiche abgedeckt werden, da über die Variation der Hebelarmlänge direkt auf die maximal auftretenden Kräfte eingewirkt werden kann.

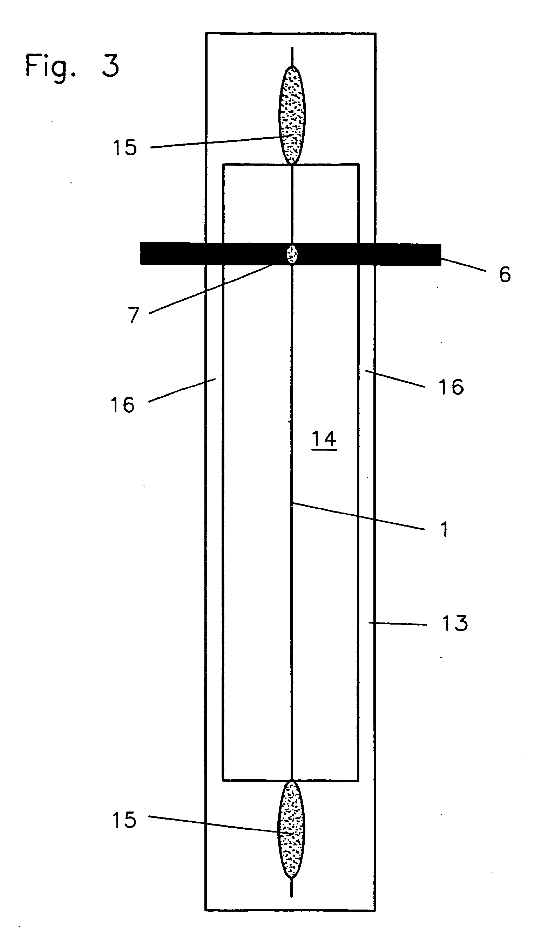

Die zu prüfenden Komponenten, insbesondere Einzelfasern werden zur besseren Handhabung vorzugsweise im Rahmen der in **Fig.1** dargestellten Ausführungsform in stabilen Rahmen eingeklebt. **Fig.3** zeigt eine Einzelfaser **1** in einen ebenen Papprahmen **13** eine Aussparung **14** im Rahmen überbrückend eingeklebt. Die beiden Klebepunkte 15 dienen dabei als Einspannung für die Einzelfaser. Für eine bessere Zentrierung und Spannungsfreiheit der Probe zwischen den beiden Klebepunkten **15** wird die Faser mit einer Überlänge beidseitig des Rahmens mit den überstehenden Enden auf diesen gehalten, zentriert, mit den Klebpunkten fixiert und anschließend die überstehenden Enden gekürzt.

Der als Drehmomentstütze dienende Querbalken **6** wird ebenfalls gemäß **Fig.3** im Bereich der Aussparung **14** plan unter oder auf den Rahmen gelegt oder zwischen Rahmen und Faser eingeschoben und ebenfalls durch eine Klebung **7** auf der Faser fixiert. Wichtig für einen bevorzugten symmetrischen Versuchsaufbau dabei ist, dass der Querbalken orthogonal zur Faser ausgerichtet ist und beidseitig der Faser gleich auskragt (Symmetrie). Die genannte Probenvorbereitung erfolgt zur Sicherstellung gleich bleibender geometrischer Abmessungen vorzugsweise mit Hilfe von Schablonen, in denen Faser, Querbalken und Papprahmen formschlüssig geführt sind. Als Klebstoff eignet sich vorzugsweise ein Zyancrylatklebstoff (Sekundenkleber). Klebung **7** und Klebepunkte **15** erstrecken sich dabei über den gesamten von dem Querbalken **6** bzw. Pappanteil des Papprahmens **13** anliegenden Teilen der Faser **1.** Zur Einbau der Faser in die Vorrichtung wird der gesamte Papprahmen mit der Faser in die Einspannungen der Auflager eingespannt, wobei die Faser zur Vermeidung überlagerter Biegebeanspruchungen lotrecht einzusetzen ist. Nach Einsetzen der Probe in die Vorrichtung wird noch vor einem Ansetzen der Kraftsensoren **8** die seitlichen Pappstege **16** aus dem Rahmen getrennt, vorzugsweise im gesamten Erstreckungsbereich der Aussparung **14.**

Zur Vorbereitung eines Versuchs mit der Ausführungsform gemäß **Fig.1 und 3** wird beispielhaft der Papprahmen zunächst im oberen Auflager eingespannt. Dieser, wie auch das untere Auflager weist zwei Klemmbacken mit Führungslehre zur exakten Positionierung des Papprahmens auf. Das Eigengewicht des Rahmens wird durch eine Kraftmessdose im oberen Auflager erfasst, der Kraftwert auf Null eingestellt (elektronisch abgenullt). Anschließend erfolgt eine Einspannung im unteren Auflager (ggf. mit x-y-Verfahrtisch zur lateralen Feinjustierung) in der Weise, dass der Papprahmen und die Faser nicht auf Zug belastet werden. Vorzugsweise wird der Rahmen bei geringer Drucklast festgeklemmt, wobei dieser sich leicht durchbiegt. Es erfolgt eine Entfernung der Pappstege in vorgenannter Weise und eine geringe axialen Zugbelastung der Faser (Komponente) mit einer Spannung im unteren elastischen Belastungsbereich (Kraft z.B. unterhalb 0,1 N); die Faser mit dem Querbalken zieht sich gerade, die Tastnadeln der Kraftmessvorrichtungen werden an den Querbalken angefahren und in einem vorbestimmten Abstand zu diesem bis zum Anzeigen eines Kraftwertes exakt angelegt.

Die Kalibrierung der Kraftmessvorrichtungen erfolgt vorzugsweise im Rahmen je eines Torsions- und Zugversuchs an einer (vorzugsweise hochisotropen) Faser (z.B. Wolframdraht oder Glasfaser) mit bekannter Werkstoffkenndaten (insbesondere der Querkontraktionszahl $\nu$). Mit dem aus dem Zugversuch ermittelten E-Modul E ergibt sich das Schubmodul G im Falle eines homogenen isotropen Materialverhaltens zu

$$G \;=\; E \;/\; 2\cdot(1+\nu) \hspace{6cm} (1)$$

Sind auch die geometrischen Daten der Faser bekannt, ist über den Zusammenhang

$$F \;=\; G\cdot I_p\cdot\varphi \;/\; l\cdot a \hspace{6cm} (2)$$

die addierte Kraft F aller Kraftmessvorrichtungen in Abhängigkeit des Verdrehwinkels $\varphi$ ermittelbar (polares Flächenträgheitsmoment $I_p$, freie Faserlänge l = Messstrecke, Hebelarmlänge a = Abstand Faser zu Tastnadelberührungspunkt auf dem Querbalken). Der Faktor m zur Umrechnung der von den Kraftsensoren gelieferten Spannungswerte $F_{(V)}$ in die tatsächlichen Kraftwerte $F_{(\mu N)}$ ergibt sich demnach aus:

$$F_{(\mu N)} \;=\; m \;\cdot\; F_{(V)} \hspace{6cm} (3)$$

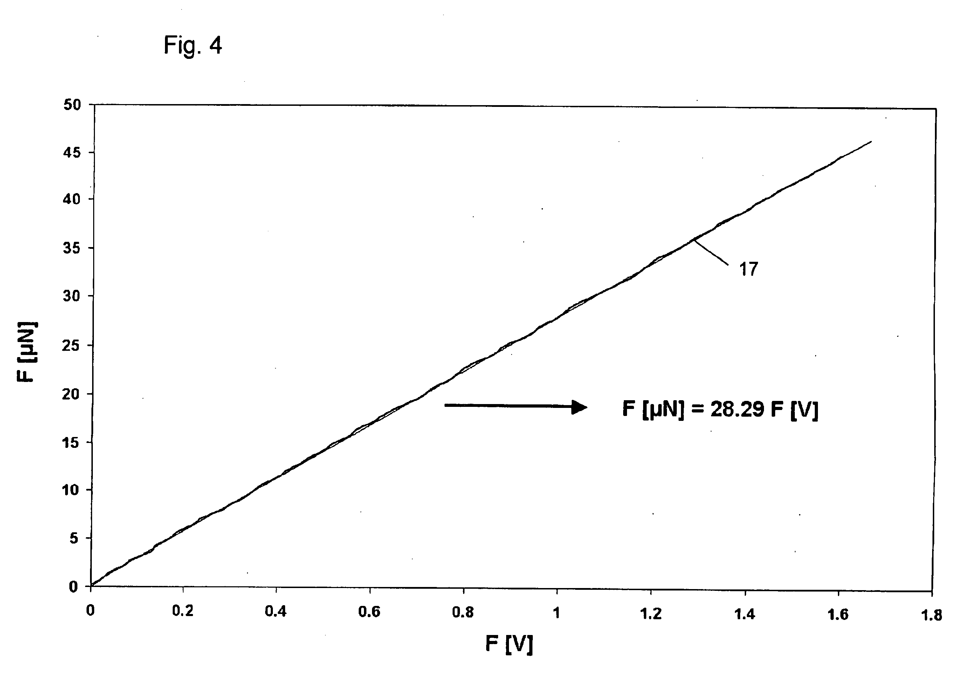

und entspricht der Steigung der Kurve aus dem $F_{(\mu N)}$-$F_{(V)}$-Diagramm gemäß **Fig.4.** Die dargestellte beispielhafte Kalibrierungskurve **17** wurde für einen Sensor an einem Wolframdraht mit D = 50 $\mu$m ermittelt. Es ergab sich aus der Steigung der Kalibrierungskurve ein Faktor m = 28,29.

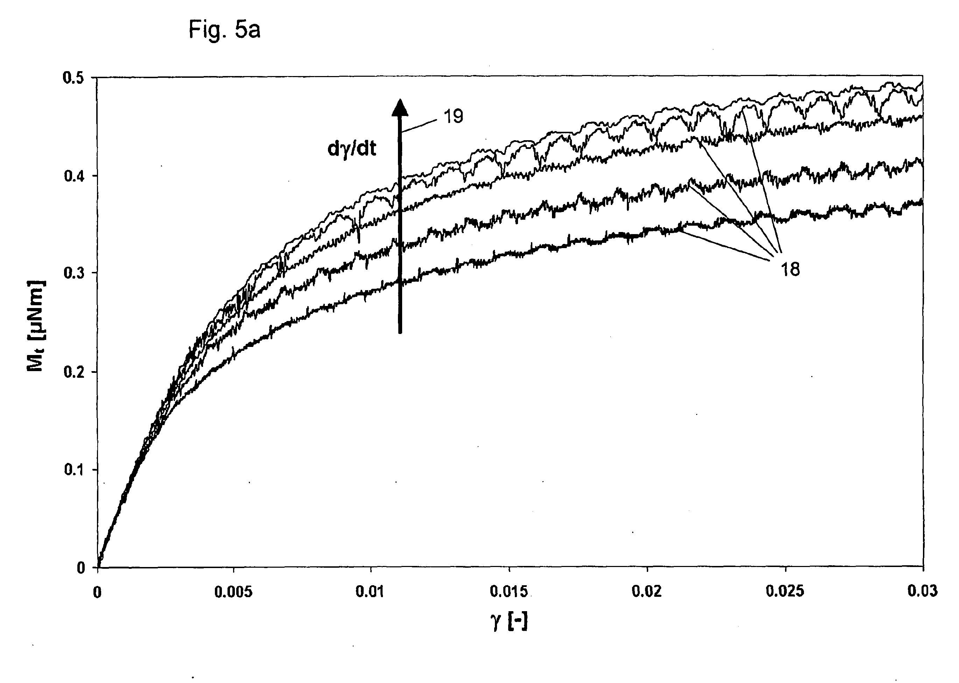

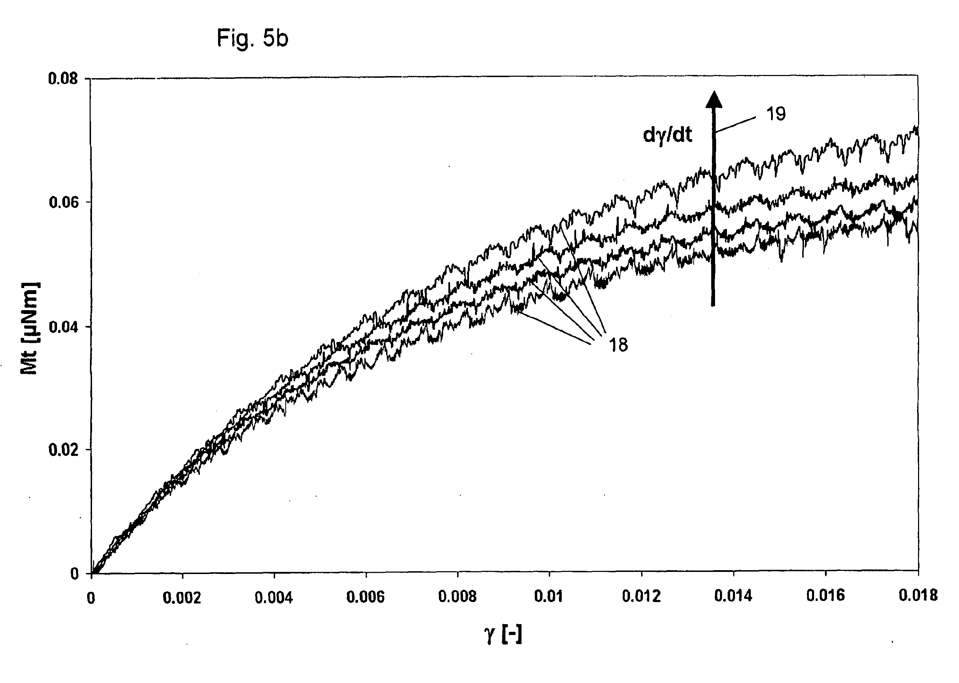

Mit den kalibrierten Kraftaufnehmern lassen sich anschließend Torsionsversuche an unterschiedlichen Proben durchführen und quantitativ auswerten. **Fig.5a und b** zeigen beispielhaft die ermittelten Torsionsmomente $M_t$ in $\mu$Nm aus Messungen an mehreren Golddrähten mit einem Durchmesser D von 25 $\mu$m **(Fig.5a)** bzw. 12,5 $\mu$m **(Fig.5b)** als Messkurven **18** in Abhängigkeit der Dehnrate $\gamma$. Die Lage der Messkurven liegt bei höheren Drehgeschwindigkeiten, damit auch bei höheren Torsionsgeschwindigkeiten und Dehnratenänderungen d$\gamma$/dt tendenziell über den anderen Messkurven mit ansonsten gleichen Versuchsparametern (vgl. Trendrichtung **19** in **Fig.5a und b**).

**Bezugszeichenliste:**

| | |
|---|---|
| 1 | Faser |
| 2 | Obere Einspannung |
| 3 | Untere Einspannung |
| 4 | Auflager |
| 5 | Drehtisch |
| 6 | Querbalken |
| 7 | Klebung |
| 8 | Kraftmessvorrichtung |
| 9 | Messstrecke |
| 10 | Obere Teilbereich |
| 11 | Zugelement |
| 12 | Kupplungsstück |
| 13 | Papprahmen |
| 14 | Aussparung |
| 15 | Klebepunkt |
| 16 | Pappstege |
| 17 | Kalibrierungskurve |
| 18 | Messkurven |
| 19 | Trendrichtung |

**Patentansprüche**

1. Vorrichtung zur Bestimmung von Torsionsmomenten im Submikronewtonmeterbereich in Komponenten **(1),** umfassend

   a) zwei Einspannungen **(2,3)** für zwei Enden der Komponente, wobei eine Einspannung (3) drehbar gelagert und zum Aufbringen eines Drehmomentes auf die Komponente motorisch angetrieben ist und die andere Einspannung **(2)** nicht angetrieben ist sowie
   b) ein mit der Komponente gekoppeltes Messteil **(6, 8),** das mit der nicht angetriebenen Einspannung starr verbunden ist,
   **dadurch gekennzeichnet, dass**
   c) das Messteil eine auf eine Tastnadel eines Kraftsensors **(8)** wirkende Drehmomentstütze **(6)** umfasst sowie
   d) das Messteil mit der nicht angetriebenen Einspannung über ein torsionselastisch nachgiebiges separates Zug-element **(11)** mit einem Auflager **(4)** verbunden ist.

2. Vorrichtung nach Anspruch 1, wobei das Zugelement **(11)** ein Stabelement oder ein Draht ist.

3. Vorrichtung nach Anspruch 1, wobei das Messteil mit der Komponente zwischen den Einspannungen fest verbunden ist.

4. Vorrichtung nach einem der vorangegangenen Ansprüche, wobei die drehbare Einspannung **(3)** eine Drehachse aufweist, die zu der anderen Einspannung **(2)** orientiert ist.

5. Vorrichtung nach Anspruch 4, wobei die Einspannungen mit ihren Einspannflächen parallel zur Drehachse ausgerichtet sind.

6. Vorrichtung nach Anspruch 4 oder 5, wobei die Drehmomentstütze mindestens zwei von der Drehachse im gleichen Winkel zueinander abstehende Ausleger umfasst, die jeweils auf eine Tastnadel wirken.

7. Vorrichtung nach einem der vorgenannten Ansprüche, wobei die Drehmomentstütze durch einen Querbalken, der orthogonal zu der Komponente (1) ausgerichtet ist und beidseitig der komponente (1) gleich auskragt, gebildet ist.

8. Vorrichtung nach einem der vorgenannten Ansprüche, wobei mindestens eines der Einspannungen als Auflager einer Universalprüfmaschine integriert ist.

9. Vorrichtung nach einem der vorgenannten Ansprüche, wobei die Kraftsensoren (8) piezoelektrische Aufnehmer umfassen.

## Claims

1. Device for determining torsional moments in the sub-micro-Newton-metre range in components (1), comprising

   a) two mountings (2, 3) for two ends of the component, wherein one mounting (3) is rotatably supported and driven by a motor to apply a torque to the component, and the other mounting (2) is not driven, as well as
   b) a measuring section (6, 8) coupled to the component that is rigidly connected to the non-driven mounting, **characterised by** the fact that
   c) the measuring section comprises a torque arm (6) acting on a feeler needle of a force sensor (8), and
   d) the measuring section with the non-driven mounting is connected by a torsion elastically flexible separate puller element (11) to a support (4).

2. Device according to Claim 1 wherein the puller element (11) is a rod element or a wire.

3. Device according to Claim 1 wherein the measuring section is securely connected to the component between the mountings.

4. Device according to one of the preceding claims wherein the rotatable mounting (3) exhibits a shaft which is oriented to the other mounting (2).

5. Device according to Claim 4 wherein the mountings with their mounting surfaces are aligned parallel to the shaft.

6. Device according to Claim 4 or 5 wherein the torsion arm comprises at least two extension arms protruding from the shaft at equal angles relative to one another, each of which acting on a feeler needle.

7. Device according to one of the preceding claims wherein the torsion arm is formed by a crossbar which is aligned orthogonally to the component (1) and projects equally either side of the component (1).

8. Device according to one of the preceding claims wherein at least one of the mountings is integrated as a support for a universal testing machine.

9. Device according to one of the preceding claims wherein the force sensors (8) comprise piezoelectric pickups.

## Revendications

1. Dispositif pour déterminer des couples de torsion dans le domaine du sous-micro-Newton-mètre dans des composants (1), comprenant :

   a) deux encastrements (2, 3) pour les deux extrémités du composant, un encastrement (3) étant monté à rotation et entraîné par un moteur pour appliquer un couple au composant et l'autre encastrement (2) n'est pas entraîné, et
   b) une partie de mesure (6, 8) couplée au composant, cette partie étant reliée rigidement à l'encastrement non entraîné,
   dispositif **caractérisé en ce que**
   c) la partie de mesure comporte un appui de couple (6) agissant sur une aiguille de palpeur d'un capteur de force (8), et
   d) la partie de mesure avec l'encastrement non entraîné, est reliée à un appui (4) par l'intermédiaire d'un élément de traction (11), séparé, souple, élastique en torsion.

2. Dispositif selon la revendication 1,
   **caractérisé en ce que**
   l'élément de traction (11) est un élément en forme de tige ou un fil.

7

**3.** Dispositif selon la revendication 1,
**caractérisé en ce que**
la partie de mesure est reliée solidairement au composant entre les encastrements.

**4.** Dispositif selon l'une des revendications précédentes,
**caractérisé en ce que**
l'encastrement (3), rotatif, comporte un axe de rotation orienté par rapport à l'autre encastrement (2).

**5.** Dispositif selon la revendication 4,
**caractérisé en ce que**
les encastrements ont des surfaces d'encastrement parallèles à l'axe de rotation.

**6.** Dispositif selon la revendication 4 ou 5,
**caractérisé en ce que**
l'appui de couple comporte au moins deux bras en saillie de l'axe de rotation suivant le même angle, et ces bras agissent chacun sur une aiguille de palpeur.

**7.** Dispositif selon l'une des revendications précédentes,
**caractérisé en ce que**
l'appui de couple, est constitué par une poutre transversale orthogonale au composant (1) et dépassant de manière égale des deux côtés du composant (1).

**8.** Dispositif selon l'une des revendications précédentes,
**caractérisé en ce qu'**
au moins l'un des encastrements est intégré comme support dans une machine d'essai universelle.

**9.** Dispositif selon l'une des revendications précédentes,
**caractérisé en ce que**
les capteurs de force (8) comportent des récepteurs piézo-électriques.

Fig. 1

Fig. 2

11, 10

2, 12

6

8

6

8

1

3

4, 5

Fig. 3

Fig. 4

17

F [μN] = 28.29 F [V]

F [V]

F [μN]

Fig. 5a

EP 1 903 326 B1

## Fig. 5b

EP 1 903 326 B1

**EP 1 903 326 B1**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- JP 07333126 A
- DE 1828549 U
- DE 10058498 C2